# EUROPÄISCHE PATENTSCHRIFT

(11) **EP 3 307 959 B1**
(45) Veröffentlichungstag und Bekanntmachung des Hinweises auf die Patenterteilung: **26.05.2021**
(21) Anmeldenummer: 16735827.4
(22) Anmeldetag: 10.06.2016
(51) Int. Cl.: F15B 15/06, E02F 3/36

(54) **SCHNELLWECHSLER**
QUICK-CHANGE DEVICE
MÉCANISME DE SERRAGE RAPIDE

(30) Priorität: 12.06.2015 DE 102015210860
(43) Veröffentlichungstag der Anmeldung: 18.04.2018
(73) Patentinhaber: Lehnhoff Hartstahl GmbH, 76534 Baden-Baden (DE)
(72) Erfinder: LEHNHOFF, Peter-Alexander, 77815 Bühl (DE)
(74) Vertreter: Puschmann Borchert Kaiser Klettner Patentanwälte Partnerschaft mbB
(86) Internationale Anmeldenummer: PCT/EP2016/063354
(87) Internationale Veröffentlichungsnummer: WO 2016/198638

(56) Entgegenhaltungen:
- EP-A1- 0 569 026
- EP-A1- 2 192 239
- WO-A1-2011/019312
- DE-U1- 9 314 409

## Beschreibung

Die Erfindung betrifft einen Schnellwechsler gemäß der im Oberbegriff des Patentanspruches 1 angegebenen Art.

Aus der WO 2011/019312 A1 ist ein Schnellwechsler für Baumaschinen bekannt, der Riegelbolzen aufweist, die hydraulisch angetrieben werden. Die Riegelbolzen sind dabei so angeordnet, dass sie zur Verriegelung eines Werkzeugs in einen am Werkzeug angebrachten Adapter eingreifen. Gemäß dieser Lehre werden die Riegelbolzen zur Verriegelung eines Adapters mit Hilfe von Hydraulikzylindern linear verfahren.

Aus der DE 93 14 409.1 U1 ist ein gattungsgemäßer Schnellwechsler für Baumaschinen bekannt, der über eine hydraulisch angetriebene mechanische Totpunktverriegelung mit federnd gelagerten Verriegelungsbolzen verfügt. Die Totpunktverriegelung ist als Kniehebelgetriebe ausgebildet und in beide Totpunktlagen mittels eines Hydraulikzylinders bewegbar. Gemäß dieser Lehre werden die Riegelbolzen im Riegel- und Entriegelungszustand über die Totpunktlagen eines Kniehebelgelenks gesichert, wobei als Anschlagpunkt für das Kniehebelgelenk das Adaptergehäuse dient.

In der DE 93 15 868.8 U1 wird ein Schnellwechsler offenbart, der mit Verriegelungsbolzen umfassend zentrisch angeordnete Gewindebohrungen mit Links- und Rechtsgewinden versehen ist. In die Gewindebohrungen ist eine beide Verriegelungsbolzen verbindende Spindel eingeschraubt, welche entweder manuell durch einen, mindestens an einem Ende der Spindel positionierten mehreckigen Schraubenkopf und einem Kurbelschlüssel, oder durch ein, im mittleren Bereich der Spindel positioniertes Rad motorisch angetrieben werden kann. Gemäß dieser Lehre werden die Riegelbolzen zur Verriegelung eines Adapters mit Hilfe eines Spindeltriebs verfahren, wobei die Spindel entweder manuell oder motorisch betrieben werden kann.

Aus DE 42 14 569 C1 ist ein Schnellwechsler für Baumaschinen bekannt, bei dem der Antrieb der Schaltwelle der Verriegelungsvorrichtung entweder mechanisch oder hydraulisch erfolgen kann.

Es ist Aufgabe der Erfindung, die Flexibilität bei der Einstellung der Verriegelungseigenschaften zu verbessern.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Weise umfasst der Schnellwechsler zumindest einen Riegelbolzen und einen motorischen Antrieb, der den Riegelbolzen in eine Verriegelungsposition und eine Entriegelungsposition entlang einer Betätigungsachse verfährt. Der Antrieb weist einen Energieanschluss und mit dem Riegelbolzen zusammenwirkende Antriebsmittel auf, und ist vorzugsweise als Drehantrieb gestaltet, der einen Motor und eine Antriebswelle umfasst. Die Antriebswelle ist mechanisch mit dem Riegelbolzen verbunden.

Indem eine Wandlung der Versorgungsenergie in eine Drehbewegung erfolgt, bevor diese wieder in eine lineare Bewegung des Riegelbolzens gewandelt wird, werden verbesserte Einflussmöglichkeiten geschaffen, die sowohl auf die Drehbewegungskomponente als auch auf die Linearbewegungskomponente wirken können.

Erfindungsgemäß weist der Antrieb einen Ansatz für eine Wellen-Nabe-Verbindung auf, an dem ein Werkzeug, wie ein Handhebel zur manuellen Betätigung, anbringbar ist, sodass eine manuelle Betätigung direkt auf die Antriebswelle wirkt. Zudem wirkt die Antriebswelle mit dem Riegelbolzen über ein Getriebe zusammen, Das Getriebe weist zur Einleitung der Drehbewegung in das Getriebe einen Drehanschluss auf. Dabei ist der Ansatz koaxial zu dem Drehanschluss angeordnet. Dadurch ist der Antrieb manuell bewegbar, so dass der Schnellwechsler auch betätigt werden kann, wenn beispielsweise die motorische Energiequelle des Drehantriebs ausfällt. Insbesondere ist der Ansatz einstückig mit dem Drehanschluss ausgebildet. Dies sorgt für eine besonders kompakte Bauform. Zudem fährt das Getriebe beim Verriegeln und Entriegeln jeweils über einen Totpunkt. Dadurch wird die Sicherheit erhöht, die Verriegelungsposition zu halten. Der Drehanschluss kann mit der Antriebswelle des Drehantriebs verbunden werden. Der Drehanschluss kann als Getriebewelle ausgebildet sein oder als Aufnahme für eine Welle ausgestaltet sein.

Gemäß einer vorteilhaften Weiterbildung der Erfindung sind zumindest zwei Riegelbolzen vorgesehen, die mechanisch über die Antriebswelle so mit dem Drehantrieb verbunden sind, dass die manuelle Bewegung auf die beiden Riegelbolzen übertragen wird, was den Vorteil bietet, die Riegelbolzen synchron mit einem Werkzeug bedienen zu können.

Insbesondere kann der Drehantrieb als fluidischer Antrieb, insbesondere hydraulischer oder pneumatischer Drehantrieb, ausgebildet sein. Vor allem hydraulische Versorgungsenergie wird bei Baufahrzeugen regelmäßig zur Verfügung gestellt. Ein entsprechender fluidischer Drehantrieb weist zum Betrieb zwei fluidische Betriebsanschlüsse auf.

Vorzugsweise kann der Drehantrieb einen Kolben umfassen, dessen Linearbewegung über Übertragungsmittel, insbesondere einer schrägen Verzahnung, in eine Drehbewegung einer Antriebswelle umgewandelt wird. Derartige Drehantriebe haben den Vorteil, dass sie bei geringer Drehzahl arbeiten und eine genaue Einstellung in einem geringen Drehwinkelbereich ermöglichen.

Gemäß einer vorteilhaften Weiterbildung der Erfindung können die zwei fluidischen Betriebsanschlüsse des Drehantriebs über einen Bypass umfassend einem Schaltventil zum Öffnen und Schließen des Bypasses verbunden sein.

Bei geschlossenem Schaltventil kann der fluidische Betrieb unbeeinflusst vorgenommen werden. Für den manuellen Betrieb muss das Schaltventil geöffnet werden, so dass ein Fluidstrom zwischen den beiden Betriebsanschlüssen des Drehantriebs ermöglicht wird, wodurch die Antriebswelle freigängig gemacht wird. So kann ein sicherer fluidischer Betrieb gewährleistet werden und dennoch eine manuelle Öffnung im Notfall erreicht werden.

Umfasst der Drehantrieb einen Zylinder können die durch den Kolben voneinander getrennten Kammern mit einem fluidischen Betriebsanschluss versehen sein. Durch die zuvor beschriebene Verbindung der Betriebsanschlüsse wird gewährleistet, dass der Riegelbolzen auch manuell bewegt werden kann, wenn die Energieversorgung des Drehantriebs gestört ist, da Fluid von einer Kammer zur anderen Kammer strömen kann.

Günstig ist es, wenn der Drehantrieb in den Endpositionen des Antriebs fluidisch, insbesondere hydraulisch, gehalten ist. Zur Lasthaltung sind insbesondere druckgesteuerte Rückschlagventile vorgesehen. Die Druckbeaufschlagung in der Endposition des Antriebs in Offenstellung bietet eine zusätzliche Absicherung so, dass eine ungewollte Bewegung aufgrund von Vibrationen, Stößen oder anderen von außen einwirkenden Kräften vermieden wird. Damit wird die Sicherheit des Schnellwechslers insgesamt erhöht.

Vorzugsweise kann das Getriebe durch ein Kniehebelgetriebe ausgebildet sein. Zum einen sind für die Betätigung über ein Kniehebelgetriebe relativ geringe Kräfte erforderlich. Zum anderen sind Kniehebelgetriebe vergleichsweise unempfindlich gegen Einflüsse wie Verschmutzung und unzureichende Schmierung und stellen geringe Anforderungen an die Maßgenauigkeit.

Des Weiteren kann ein mechanischer Anschlag vorgesehen sein, insbesondere jenseits des Totpunktes, der die Bewegung des Antriebs in Richtung Verriegelungsposition begrenzt. Dadurch kann die Endlage des Antriebs und damit die maximale Ausfahrposition definiert werden, wodurch ein sicherer Betrieb gewährleistet wird.

In einer weiteren vorteilhaften Ausgestaltung weist das Getriebe, umfassend einen Drehanschluss, in der Verriegelungsposition einen mechanischen Anschlag auf, wobei der Anschlag durch den Drehanschluss und durch einen Teil des Kniehebelgetriebes gebildet wird, wobei das Getriebe ein Koppelglied aufweist, welches mit einer Anschlagnase versehen ist, die den Teil des Anschlags des Getriebes bildet. Der Anschlag kann derart gestaltet sein, dass die resultierende Kraft des entlang der Betätigungsachse beaufschlagten Riegelbolzens radial zum Drehanschluss des Getriebes in diesen eingeleitet wird. Dadurch wird durch die resultierende Kraft kein Drehmoment auf den Drehanschluss ausgeübt. Die Verriegelung des Schnellwechslers ist daher besonders sicher.

Günstig ist es weiterhin, wenn der Anschlag derart ausgebildet ist, dass die resultierende Kraft radial zum Drehanschluss in einem Winkel von 30°bis 40°, vorzugsweise 34°, zur Parallelen zur Betätigungsachse durch die Drehanschlussachse, liegt.

Es hat sich als vorteilhaft erwiesen, wenn die Antriebswelle des Antriebs orthogonal zur Betätigungsachse des Riegelbolzens ausgerichtet ist. Diese Anordnung lässt Freiraum im zentralen Bereich des Schnellwechslers, so dass dieser beispielsweise für Hydraulikkupplungen zur Verfügung steht.

Gemäß einem weiteren Aspekt der Erfindung sind zumindest zwei Riegelbolzen vorgesehen, die jeweils mit einem Getriebe verbunden sind, das einen Drehanschluss aufweist. Die Drehanschlüsse können mit der Antriebswelle verbunden werden. Auf diese Weise können zwei Riegelbolzen mit einem Drehantrieb synchron bedient werden.

Gemäß einer besonders vorteilhaften Ausgestaltung können die Drehanschlüsse über den Drehantrieb miteinander verbunden sein, der beispielsweise zwei Anschlüsse an eine Antriebswelle bereitstellt. Dies hat den Vorteil einer besonders kompakten Bauform. Alternativ kann der Drehantrieb, beispielsweise über einen Keilriemen, auch an eine die beiden Drehanschlüsse verbindende Welle gekoppelt sein.

Vorzugsweise ist die Antriebswelle lösbar mit dem Getriebe verbunden, so dass der Drehantrieb ersetzbar ist. Dies erleichtert Wartung und Reparatur des Drehantriebs. Durch Entnahme des Drehantriebs kann auch eine modulare Umrüstung auf eine rein mechanische Ausführungsform erfolgen. Dazu können die beiden Drehanschlüsse über eine Welle/Stange verbunden werden, so dass bei einer manuellen Betätigung des Getriebes, insbesondere über einen am Drehanschluss angeformten Ansatz, eine synchrone Bewegung beider Riegelbolzen erfolgt.

Bei einer vorteilhaften Weiterbildung der Erfindung ist zwischen Getriebe und dem Riegelbolzen jeweils eine Feder zwischengeschaltet, die die Riegelbolzen in Richtung Verriegelungsposition vorspannt. Dadurch wird einerseits der mögliche Verfahrweg des Riegelbolzens vergrößert. Andererseits wird eine genauere Positionierung der beiden Riegelbolzen in axialer Richtung ermöglicht, was die Verriegelung sicherer macht. Des Weiteren wird die Bewegung der beiden synchron geführten Riegelbolzen durch die Federn soweit entkoppelt, dass trotz fertigungsbedingten Toleranzen und über den Gebrauch entstehender Verschleiß für beide Riegelbolzen eine sichere Anlage an der jeweiligen Riegelwelle gewährleistet wird. Dies dient jederzeit zur Erreichung einer sicheren Verbindung.

Es ist zweckmäßig, dass der durch eine auf den Riegelbolzen wirkende Rückstellkraft hervorgerufene Verfahrweg des Riegelbolzens in Entriegelungsrichtung durch einen Anschlag begrenzt ist. So kann eine definierte Endposition festgelegt werden und bei entsprechender Dimensionierung der Verfahrweg der Federn begrenzt und so eine Überbeanspruchung der Feder verhindert werden. Im Unterschied zu einem bekannten Zylinderantrieb wird daher nicht mehr die volle Haltekraft des Motors benötigt. Es erfolgt eine Abkopplung des Antriebs von den auf den Riegelbolzen wirkenden Betriebskräfte durch Zwischenschaltung der Feder. Bei Erreichen der Federwegbegrenzung wird ein Öffnen des Schnellwechslers verhindert, da durch das Kniehebelgetriebe in Verriegelungsrichtung die Kräfte eingeleitet werden und zudem auch das Getriebe einen in Verriegelungsrichtung wirkenden Anschlag aufweist.

Günstig ist es, wenn der Drehantrieb in seinem Drehbereich begrenzt ist. Dies erlaubt für den notwendigen Drehbereich, der abhängig von den Geometrien des Getriebes und des linearen Verfahrwegs des oder der Riegelbolzen ist, eine möglichst kompakte Bauform zu wählen. Besonders vorteilhaft hat sich eine Begrenzung auf einen Bereich zwischen 0° bis 110° und 0° bis 130° erwiesen.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine perspektivische Ansicht eines erfindungsgemäßen Schnellwechslers und einen Adapter;
- Fig. 2: eine schematische Draufsicht auf den Antrieb;
- Fig. 3a: eine Seitenansicht auf den eingefahrenen Antrieb;
- Fig. 3b: eine Seitenansicht auf den ausgefahrenen Antrieb, und
- Fig. 4: eine Hydraulikschaltung mit einem Schaltventil.

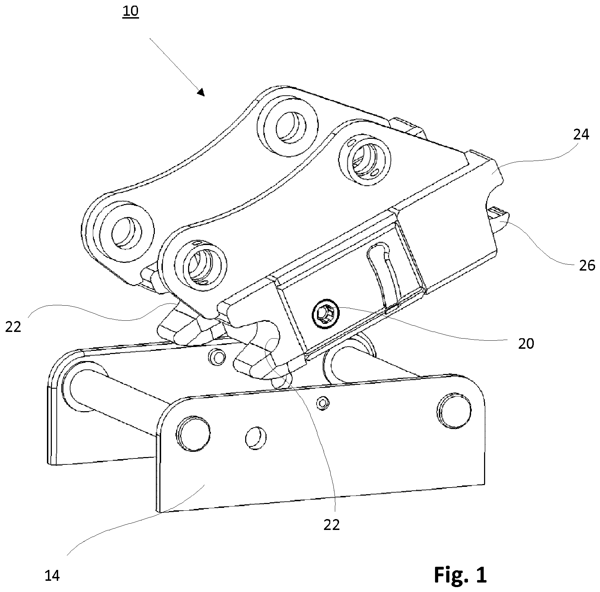

Fig. 1 zeigt eine perspektivische Ansicht des Schnellwechslers 10 und einen Schnellwechseladapter 14.

Der Schnellwechseladapter 14 umfasst zwei parallele zylindrische Querstreben.

Der Schnellwechsler 10 weist an seinem ersten Ende Klauen 22 auf, die eine erste Querstrebe des Schnellwechseladapters 14 umgreifen, und an der dem ersten Ende gegenüberliegendem Ende eine Aufnahmevorrichtung 20, welche eine zweite Querstrebe des Schnellwechseladapters 14 zwischen einem Widerlager 24 und zwei axial verfahrbaren Riegelbolzen 26 fixiert, wodurch eine Kopplung des Schnellwechseladapters 14 an den Schnellwechsler 10 erfolgt.

Der Schnellwechsler 10 ist in seiner Längserstreckung bezüglich einer Mittelachse M im Wesentlichen achsensymmetrisch ausgebildet.

Jeder Riegelbolzen 26 ist über einen in den nachfolgenden Figuren erläuterten Antrieb in eine Entriegelungsposition einfahrbar und in eine Verriegelungsposition ausfahrbar. Ferner ist seitlich ein Ansatz 20 vorgesehen, in welchen ein Werkzeug (Handhebel) in Eingriff gebracht werden kann, um den Antrieb 16 rein mechanisch zu betätigen und eine Bewegung der Riegelbolzen 26 hervorzurufen.

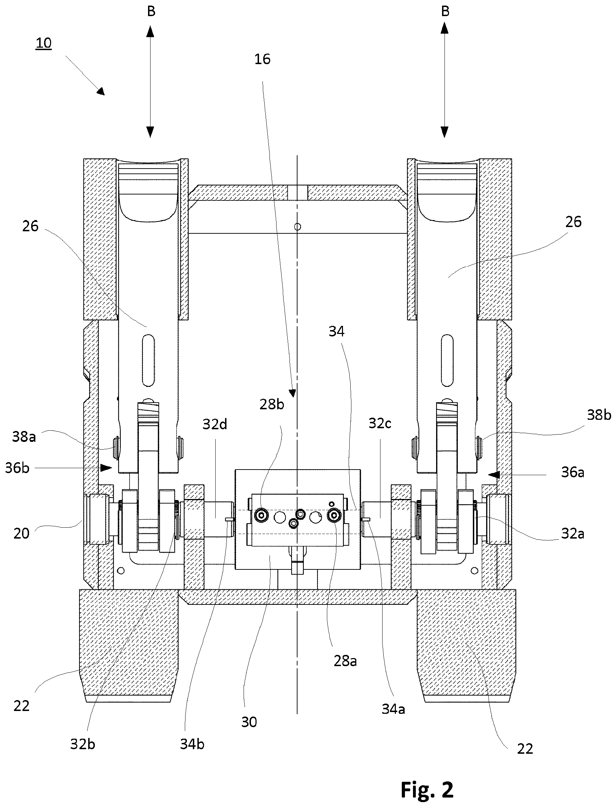

Fig. 2 zeigt eine schematische Draufsicht auf den Schnellwechsler 10, wobei das Gehäuse des Schnellwechslers 10 geschnitten ist, um eine Sicht auf den Antrieb 16 zu gewähren. Aus dieser Ansicht gehen auch die Klauen 22, welche ausgebebildet sind, um eine erste Querstrebe zu umgreifen, sowie die für die Festlegung der zweiten Querstrebe festlegbaren Riegelbolzen 26 hervor. Die Riegelbolzen 26 sind entlang der Betätigungsachse B durch den Antrieb 16 verfahrbar. Der Antrieb 16 umfasst einen Drehantrieb 30, der von einer Antriebswelle 34 durchgriffen wird, und zwei Kupplungsanschlüsse 34a, 34b zum Ankuppeln der Getriebewelle 32 an der Antriebswelle 34 zum Abgriff der Drehbewegung aufweist. Die Antriebswelle 34 ist strichliniert in Fig. 2 angedeutet. Die Getriebewelle 32 ist zweigeteilt ausgebildet. Ein erster Teil 32c der Getriebewelle 32 weist den Anschluss 34a und einen weiteren Anschluss 32a auf, auf den weiter unten noch eingegangen wird. Ein zweiter Teil 32d der Getriebewelle 32 weist den Anschluss 34b und einen weiteren Anschluss 32b auf, auf den ebenfalls weiter unten noch eingegangen wird.

Ferner umfasst der Antrieb 16 zwei Kniehebelgetriebe 36a, 36b, die je mit einem Riegelbolzen 26 derart verbunden sind, so dass eine Drehbewegung der Antriebswelle 34 über die Getriebewelle 32 zu einer Linearbewegung des jeweiligen Riegelbolzens 26 führt. Der Drehantrieb 30 ist als hydraulischer Drehantrieb ausgebildet und weist zwei hydraulische Betriebsanschlüsse 28a, 28b auf. Das Kniehebelgetriebe 36a, 36b ist mit dem Drehanschluss 32a, 32b der Getriebewelle 32 verbunden, über welche die Drehbewegung in das Kniehebelgetriebe 36a, 36b eingeleitet wird. Die Teile 32c und 32d der Getriebewelle 32 sind beispielsweise über die Abtriebsanschlüsse 34a, 34b der Antriebswelle 34 bildende Steckverbindungen oder jeweils über einen Flansch an die Antriebswelle 34 lösbar gekoppelt.. Ein Teil 32c oder beide Teile 32d der Getriebewelle 32 können einen Ansatz 20 umfassen. Der Ansatz 20 ist koaxial zur Getriebewelle 32 angeordnet. Bei einer manuellen Betätigung wird die über den Ansatz 20 eingeleitete Antriebskraft direkt auf das eine Teil 32c oder 32d der Getriebewelle 32, über die Antriebswelle 34 und auf den Drehantrieb 30 auf das weitere Teil 32d bzw. 32c der Getriebewelle 32 übertragen. Die Getriebewelle 32 und die Antriebswelle 34 sind koaxial zueinander angeordnet.

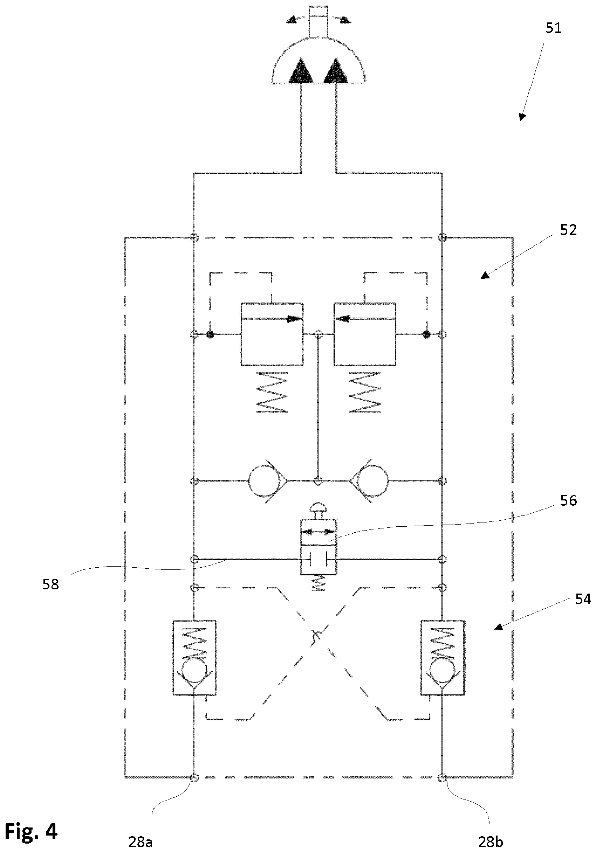

Dazu muss der Drehantrieb 30 einen Leerlauf ermöglichen. Mögliche Umsetzungen für ein entsprechendes Verhalten sind in der nachfolgenden Fig. 4 beschrieben.

Aufgrund der lösbaren Anordnung des Drehantriebs 30 kann der Drehantrieb 30 im Falle eines Defekts getauscht werden oder es kann durch eine drehfeste Verbindung der Getriebewellen 32a, 32b eine Umrüstung des Schnellwechslers 10 in eine rein mechanische Ausführung erfolgen, die ausschließlich durch den Ansatz 20 betätigbar ist.

Die Riegelbolzen 26 sind beweglich gegenüber dem zugeordneten Kniehebelgetriebe 36a, 36b geführt, wobei die Linearbewegung jedes Riegelbolzens 26 durch einen zugeordneten Anschlagstift 38a bzw. 38b in Betätigungsrichtung B beidseitig begrenzt ist.

Durch die Kombination der Kniehebelgetriebe 36a, 36b mit einem hydraulischen Drehantrieb 30 ist ein hydromechanischer Schnellwechsler geschaffen.

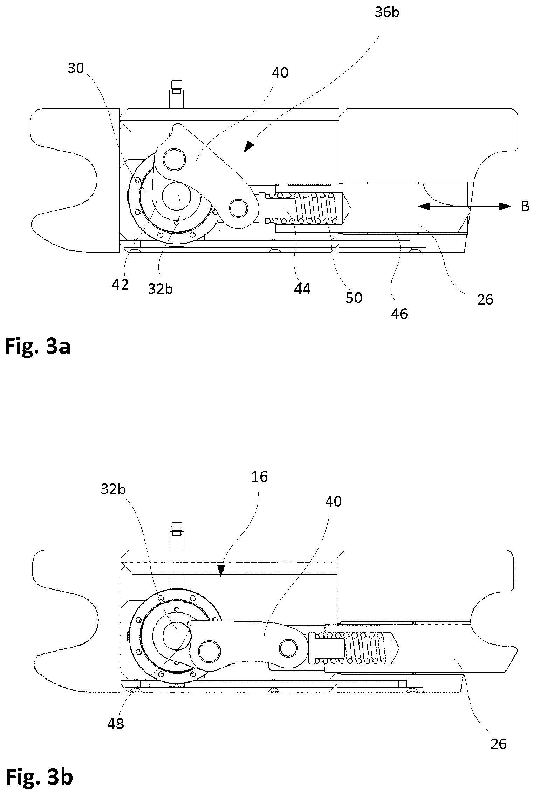

Die Figuren 3a und 3b zeigen eine seitliche Schnittansicht des Antriebs 16, wobei der sichtbare Riegelbolzen 26 in Fig. 3a im eingefahrenen Zustand und in Fig. 3b im ausgefahrenen Zustand dargestellt ist.

Das Kniehebelgetriebe 36b weist einen drehfest mit der Getriebewelle 32b verbundenen Hebel 42 auf. Der Hebel 42 ist über ein drehbar am Hebel 42 gelagertes Koppelglied 40 mit dem jeweiligen Riegelbolzen 26 verbunden. Eine Riegelbolzenlagerung 44 ist drehbar am Koppelglied 40 gelagert. Der Riegelbolzen 26 ist jeweils entlang der Betätigungsachse B in einer Gleitbuchse 46 geführt. Der Riegelbolzen 26 ist jeweils mit der Riegelbolzenlagerung über eine Feder 50 verbunden, die den Riegelbolzen 26 in Verriegelungsrichtung gegenüber der Riegelbolzenlagerung 44 vorspannt. Eine Drehung des Drehantriebs 30 in einem Winkelbereich von 0° in der Ausgangslage bis etwa 120° führt zu einem vollständigen Ausfahren des Riegelbolzens 26.

Fig. 3b zeigt den Antrieb 16 in einem ausgefahrenen Zustand. Das Koppelglied 40 ist mit einer Anschlagsnase 48 versehen, die im ausgefahrenen Zustand an der Getriebewelle 32b anliegt. Die Anschlagsnase 48 ist derart gestaltet, dass sie bei Einleitung einer Rückstellkraft auf den zugeordneten Riegelbolzen 26 entlang der Betätigungsachse B aufgrund der Umlenkung am Lagerpunkt zwischen Hebel 42 und Koppelglied 40 eine Krafteinleitung in die Getriebewelle 32b in radialer Richtung zur Folge hat, so dass kein rückstellendes Drehmoment auf die Getriebewelle 32b wirkt. Dies sichert den Antrieb 16 gegenüber einem ungewollten Öffnen. Jeder Riegelbolzen 26 ist sowohl in Ausfahrrichtung als auch in Einfahrrichtung über je einen Anschlag in seiner Bewegung gegenüber der Riegelbolzenlagerung 44 begrenzt.

Fig. 4 zeigt eine dem Drehantrieb 30 vorgeschaltete Hydraulikschaltung 51, wobei neben einer Lasthalteschaltung 54 und einer Überdruckschaltung 52 ein über ein Schaltventil 56 freigebbarer Bypass 58 vorgesehen ist. Durch Öffnung des Bypasses 58 wird die manuelle Betätigung des Antriebs 16 ermöglicht. Auf diese Weise kann von einem Hydraulikbetrieb auf einen manuellen Betrieb umgeschaltet werden.

### Bezugszeichenliste

- 10: Schnellwechsler
- 14: Schnellwechseladapter
- 16: Antrieb
- 20: Aufnahmevorrichtung
- 22: Klauen
- 24: Widerlager
- 26: Riegelbolzen
- 28a, 28b: hydraulische Betriebsanschlüsse
- 30: Drehantrieb
- 32: Getriebewelle
- 32a, 32b: Drehanschlüsse
- 32c: erster Teil der Getriebewelle 32
- 32d: zweiter Teil der Getriebewelle 32
- 34: Antriebswelle
- 34a, 34b: Anschlüsse
- 36a, 36b: Kniehebelgetriebe
- 38a, 38b: Anschlagstift
- 40: Koppelglied
- 42: Hebel
- 44: Riegelbolzenlagerung
- 46: Gleitbuchse
- 48: Anschlagsnase
- 50: Feder
- 51: Hydraulikschaltung
- 52: Überdruckschaltung
- 54: Lasthalteschaltung
- 56: Schaltventil
- 58: Bypass

- M: Mittelachse

## Patentansprüche

1. Schnellwechsler (10) mit zumindest einem Riegelbolzen (26) und einem motorischen Antrieb, der den Riegelbolzen (26) in eine Verriegelungsposition und eine Entriegelungsposition verfährt, wobei der Antrieb (16) einen Energieanschluss und mit dem Riegelbolzen (26) zusammenwirkende Antriebsmittel (30, 34) aufweist, die einen Drehantrieb (30) mit einem Motor und eine Antriebswelle (34) umfassen, wobei die Antriebswelle (34) mechanisch mit dem Riegelbolzen (26) verbunden ist, so dass der Riegelbolzen (26) entlang einer Betätigungsachse (B) verfahrbar ist. **dadurch gekennzeichnet, dass** der Antrieb (16) einen Ansatz (20) für eine Wellen-Nabe-Verbindung aufweist, an dem ein Werkzeug, wie ein Handhebel (42) zur manuellen Betätigung, anbringbar ist, so dass eine manuelle Betätigung direkt auf die Antriebswelle (34) wirkt, die Antriebswelle (34) mit dem Riegelbolzen (26) über ein Getriebe (36a, 36b) zusammenwirkt, das Getriebe (36a, 36b) beim Verriegeln und Entriegeln jeweils über einen Totpunkt fährt, zur Einleitung der Drehbewegung in das Getriebe (36a, 36b) einen Drehanschluss (32a, 32b) aufweist und dabei der Ansatz (20) koaxial zu dem Drehanschluss (32a, 32b) angeordnet ist

2. Schnellwechsler nach Anspruch 1, **dadurch gekennzeichnet, dass** zwei Riegelbolzen (26) vorgesehen sind, der Drehantrieb (30) über die Antriebswelle (34) mechanisch mit beiden Riegelbolzen (26) so verbunden ist, dass die manuelle Bewegung auf die beiden Riegelbolzen (26) übertragen wird.

3. Schnellwechsler nach Anspruch 1 oder 2, **dadurch gekennzeichnet, dass** der Drehantrieb (30) als fluidischer Drehantrieb, insbesondere hydraulischer oder pneumatischer, Drehantrieb ausgebildet ist.

4. Schnellwechsler nach Anspruch 3, **dadurch gekennzeichnet, dass** der Drehantrieb (30) einen Kolben umfasst, dessen Linearbewegung über Übertragungsmittel, insbesondere einer Verzahnung, in eine Drehbewegung einer Antriebswelle (34) umgewandelt wird.

5. Schnellwechsler nach Anspruch 3 oder 4, **dadurch gekennzeichnet, dass** der Drehantrieb (30) zwei fluidische Anschlüsse (28a/28b) aufweist, die über eine Drossel verbunden sind.

6. Schnellwechsler nach den Ansprüchen 1 bis 5, **dadurch gekennzeichnet, dass** der Drehantrieb (30) zwei fluidische Anschlüsse (28a/28b) aufweist, die über einen Bypass (58) umfassend ein Schaltventil (56) zum Öffnen und Schließen des Bypasses (58) verbunden sind, wobei das Schaltventil (56) im Fluidbetrieb geschlossen ist und das Schaltventil (56) bei manuellem Betrieb geöffnet ist, so dass im laufenden Maschinenbetrieb zwischen fremdkraftbetrieb und manuellem Betrieb des Drehmotors (30) gewechselt werden kann.

7. Schnellwechsler nach einem der vorangehenden Ansprüche, **dadurch gekennzeichnet, dass** der Drehantrieb (30) in den Endlagen des Antriebs (16) fluidbeaufschlagt, insbesondere hydraulisch gehalten ist, wobei zur Lasthaltung druckgesteuerte Rückschlagventile vorgesehen sind

8. Schnellwechsler nach einem der vorangehenden Ansprüche, **dadurch gekennzeichnet, dass** das Getriebe ein Kniehebelgetriebe (36a, 36b) umfasst.

9. Schnellwechsler nach einem der vorangehenden Ansprüche, **dadurch gekennzeichnet, dass** ein mechanischer Anschlag vorgesehen ist, der die Bewegung des Antriebs (16) in Richtung Verriegelungsposition begrenzt.

10. Schnellwechsler nach Anspruch 9, **dadurch gekennzeichnet, dass** der Anschlag als mechanischer Anschlag ausgebildet ist, wobei der Anschlag durch die Antriebswelle (34) und durch einen Teil des Getriebes (36b) gebildet wird, wobei das Getriebe ein Koppelglied (40) aufweist, welches mit einer Anschlagnase (48) versehen ist, die den Teil des Anschlags des Getriebes (36b) bildet, so dass in der Verriegelungsposition bei einer auf den Riegelbolzen (26) wirkenden Rückstellkraft in Entriegelungsrichtung eine Krafteinleitung in die Antriebswelle (34) in radialer Richtung über die Anschlagsnase erfolgt, so dass kein rückstellendes Drehmoment auf die Getriebewelle (32) wirkt.

11. Schnellwechsler nach einem der vorangehenden Ansprüche, **dadurch gekennzeichnet, dass** die Antriebswelle (34) des Antriebs (16) orthogonal zur Betätigungsachse des Riegelbolzens (26) ausgerichtet ist.

12. Schnellwechsler nach einem der vorangehenden Ansprüche, **dadurch gekennzeichnet, dass** zumindest zwei Riegelbolzen (26) vorgesehen sind, die über jeweils ein Getriebe (36a, 36b) mit der Antriebswelle (34) verbunden sind.

13. Schnellwechsler nach Anspruch 12, **dadurch gekennzeichnet, dass** die zwei Getriebe (36a, 36b) über den Drehantrieb (30) miteinander verbunden sind.

14. Schnellwechsler nach einem der vorangehenden Ansprüche, **dadurch gekennzeichnet, dass** die Antriebswelle (34) lösbar mit dem Getriebe (36a, 36b) verbunden ist, so dass der Drehantrieb (30) ersetzbar ist.

15. Schnellwechsler nach einem der vorangehenden Ansprüche, **dadurch gekennzeichnet, dass** der Drehwinkelbereich des Drehantriebs (30) auf einen notwendigen Drehwinkel begrenzt ist, insbesondere der Drehwinkelbereich auf zwischen 0° bis 110° und 0° bis 130° begrenzt ist, wobei sich der notwendige Drehwinkelbereich abhängig von den Geometrien des Getriebes (36a, 36b) und des linearen Verfahrwegs des oder der Riegelbolzen (26) ergibt.

## Claims

1. Quick coupler (10) having at least one locking bolt (26) and a motor drive that is used to displace the locking bolt (26) between a locking position and an unlocking position thereof, which drive (16) has a power connection and drive means (30, 34) that cooperate with the locking bolt (26) and comprise a rotary drive (30) with a motor and a drive shaft (34), which drive shaft (34) is mechanically connected to the locking bolt (26) so as to enable the locking bolt (26) to be displaced along an actuation axis (B), **characterized in that** the drive (16) has a lug (20) for a shaft-hub connection to which a tool, such as a hand lever (42) for manual actuation, can be attached, so that manual actuation thereof will act directly on the drive shaft (34), the drive shaft (34) will interact with the locking bolt (26) via a gear system (36a, 36b), which gear system (36a, 36b) will move over a dead center during locking and unlocking, has a rotary joint (32a, 32b) for introducing the rotary movement into the gear system (36a, 36b), and the lug (20) is arranged coaxially with the rotary joint (32a, 32b).

2. Quick coupler (10) according to claim 1, **characterized in that** two locking bolts (26) are provided, the rotary drive (30) is mechanically connected to both locking bolts (26) via the drive shaft (34) in such a way that the manual movement is transmitted to the two locking bolts (26).

3. Quick coupler (10) according to one of claims 1 and 2 above, **characterized in that** the rotary drive (30) is designed as a fluidic rotary drive, in particular as a hydraulic or pneumatic rotary drive.

4. Quick coupler (10) according to claim 3, **characterized in that** the rotary drive (30) comprises a piston, the linear movement of which is converted into a rotary movement of a drive shaft (34) via transmission means, in particular gearing.

5. Quick coupler (10) according to one of claims 3 and 4 above, **characterized in that** the rotary drive (30) has two fluidic connectors (28a, 28b) which are connected to each other via a restrictor.

6. Quick coupler (10) according to any one of claims 1 to 5 above, **characterized in that** the rotary drive (30) has two fluidic connections (28a, 28b) which are connected to each other via a bypass (58) that comprises a switching valve (56) for opening and closing the bypass (58), which switching valve (56) is closed during fluid operation and which switching valve (56) is open during manual operation, so as to permit switching between external power operation and manual operation of the rotary motor (30) during ongoing machine operation.

7. Quick coupler (10) according to any one of the preceding claims, **characterized in that** in the end positions of the drive (16), the rotary drive (30) is fluid-actuated, in particular held hydraulically, with pressure-controlled check valves being provided for load holding.

8. Quick coupler (10) according to any one of the preceding claims, **characterized in that** the gear system comprises a toggle mechanism (36a, 36b).

9. Quick coupler (10) according to any one of the preceding claims, **characterized in that** a mechanical stop is provided which limits the movement of the drive (16) in the direction of the locking position.

10. Quick coupler (10) according to claim 9, **characterized in that** the stop is designed as a mechanical stop, the stop being formed by the drive shaft (34) and by a part of the gear system (36b), the gear system having a coupling member (40) which is provided with a stop lug (48) that constitutes the part of the stop of the gear system (36b), so that in the locking position, in the event of a restoring force acting on the locking bolt (26) in the unlocking direction, a force is introduced into the drive shaft (34) in the radial direction via the stop lug so as to prevent the restoring torque from acting on the gear shaft (32).

11. Quick coupler (10) according to any one of the preceding claims, **characterized in that** the drive shaft (34) of the drive (16) is aligned orthogonally to the actuation axis of the locking bolt (26).

12. Quick coupler (10) according to any one of the preceding claims, **characterized in that** at least two locking bolts (26) are provided, each of which is connected to the drive shaft (34) via a gear system (36a, 36b).

13. Quick coupler (10) according to claim 12, **characterized in that** the two gear systems (36a, 36b) are connected to one another via the rotary drive (30).

14. Quick coupler (10) according to any one of the preceding claims, **characterized in that** the drive shaft (34) is detachably connected to the gearbox (36a, 36b) so as to permit the replacement of the rotary drive (30).

15. Quick coupler (10) according to any one of the preceding claims, **characterized in that** the range of the angle of rotation of the rotary drive (30) is limited to a necessary angle of rotation, with the range of the angle of rotation being in particular limited to between 0° and 110° and 0° and 130°, with the necessary range of the angle of rotation being a function of the geometries of the gear system (36a, 36b) and of the linear travel of the one or plural locking bolt(s) (26).

## Revendications

1. Dispositif d'attache rapide (10) avec au moins un boulon de verrouillage (26) et un entraînement motorisé qui déplace le boulon de verrouillage (26) dans une position de verrouillage et une position de déverrouillage, dans lequel l'entraînement (16) présente une borne d'alimentation et des moyens d'entraînement (30, 34) coopérant avec le boulon de verrouillage (26) qui comprennent un entraînement en rotation (30) avec un moteur et un arbre d'entraînement (34), dans lequel l'arbre d'entraînement (34) est mécaniquement relié au boulon de verrouillage (26) de sorte que le boulon de verrouillage (26) est déplaçable le long d'un axe d'actionnement (B), **caractérisé en ce que** l'entraînement (16) présente un épaulement (20) pour une liaison arbre-moyeu contre lequel un outil, tel un levier manuel (42), peut être monté pour un actionnement manuel, de sorte qu'un actionnement manuel agit directement sur l'arbre d'entraînement (34), l'arbre d'entraînement (34) coopérant avec le boulon de verrouillage (26) via une transmission (36a, 36b), la transmission (36a, 36b) passant, lors du verrouillage et du déverrouillage, respectivement via un point mort, et présentant une borne de rotation (32a, 32b) pour amorcer le mouvement de rotation dans la transmission (36a, 36b) et avec l'épaulement (20) qui est agencé de façon coaxiale à la borne de rotation (32a, 32b).

2. Dispositif d'attache rapide selon la revendication 1, **caractérisé en ce que** sont prévus deux boulons de verrouillage (26), l'entraînement en rotation (30) étant mécaniquement relié aux deux boulons de verrouillage (26) via l'arbre d'entraînement (34) de sorte que le mouvement manuel est transmis vers les deux boulons de verrouillage (26).

3. Dispositif d'attache rapide selon la revendication 1 ou 2, **caractérisé en ce que** l'entraînement en rotation (30) est conçu en tant qu'entraînement en rotation fluidique, en particulier en tant qu'entraînement en rotation hydraulique ou pneumatique.

4. Dispositif d'attache rapide selon la revendication 3, **caractérisé en ce que** l'entraînement en rotation (30) comprend un piston dont le mouvement linéaire est converti via des moyens de conversion, en particulier une denture, en un mouvement de rotation d'un arbre d'entraînement (34).

5. Dispositif d'attache rapide selon la revendication 3 ou 4, **caractérisé en ce que** l'entraînement en rotation (30) présente deux liaisons fluidiques (28a/28b) qui sont reliées via un étranglement.

6. Dispositif d'attache rapide selon les revendications 1 à 5, **caractérisé en ce que** l'entraînement en rotation (30) présente deux liaisons fluidiques (28a/28b) qui sont reliées via une dérivation (58) comprenant une vanne de commutation (56) pour ouvrir et fermer la dérivation (58), dans lequel la vanne de commutation (56) est fermée en fonctionnement fluidique et la vanne de commutation (56) est ouverte en fonctionnement manuel de sorte qu'en cours de fonctionnement, on peut changer entre un fonctionnement par force extérieure et un fonctionnement manuel de l'entraînement en rotation (30).

7. Dispositif d'attache rapide selon l'une des revendications précédentes, **caractérisé en ce que** dans les positionnements finaux de l'entraînement (16), l'entraînement en rotation (30) est sollicité fluidiquement, en particulier maintenu hydrauliquement, dans lequel des vannes de retenue commandées par pression sont prévues afin de maintenir la charge.

8. Dispositif d'attache rapide selon l'une des revendications précédentes, **caractérisé en ce que** la transmission comprend une transmission à levier à genouillère (36a, 36b).

9. Dispositif d'attache rapide selon l'une des revendications précédentes, **caractérisé en ce qu'**est prévue une butée mécanique qui limite le mouvement de l'entraînement (16) dans la direction de la position de verrouillage.

10. Dispositif d'attache rapide selon la revendication 9, **caractérisé en ce que** la butée est conçue en tant que butée mécanique, dans lequel la butée est formée par l'arbre d'entraînement (34) et par une partie de la transmission (36b), dans lequel la transmission présente un organe de couplage (40), lequel est doté d'un talon de butée (48) qui forme la partie de la butée de la transmission (36b) de sorte que dans la position de verrouillage, dans le cas d'une force de rappel agissant sur le boulon de verrouillage (26) dans la direction de déverrouillage, il se produit une introduction de force dans l'arbre d'entraînement (34) dans la direction radiale via le talon de butée de sorte qu'aucun moment de rotation de rappel n'agit sur l'arbre de transmission (32).

11. Dispositif d'attache rapide selon l'une des revendications précédentes, **caractérisé en ce que** l'arbre d'entraînement (34) de l'entraînement (16) est orienté perpendiculairement à l'axe d'actionnement du boulon de verrouillage (26).

12. Dispositif d'attache rapide selon l'une des revendications précédentes, **caractérisé en ce que** sont prévus au moins deux boulons de verrouillage (26) qui sont reliés à l'arbre d'entraînement (34) via respectivement une transmission (36a, 36b).

13. Dispositif d'attache rapide selon la revendication 12, **caractérisé en ce que** les deux transmissions (36a, 36b) sont reliées ensemble via l'entraînement en rotation (30).

14. Dispositif d'attache rapide selon l'une des revendications précédentes, **caractérisé en ce que** l'arbre d'entraînement (34) est relié de façon amovible à la transmission (36a, 36b) de sorte que l'entraînement en rotation (30) peut être remplacé.

15. Dispositif d'attache rapide selon l'une des revendications précédentes, **caractérisé en ce que** la plage d'angle de rotation de l'entraînement en rotation (30) est limitée à un angle de rotation nécessaire, en particulier la plage d'angle de rotation est limitée à entre 0° à 110° et 0° à 130°, dans lequel la plage d'angle de rotation nécessaire résulte des géométries de la transmission (36a, 36b) et du trajet de déplacement linéaire du ou des boulon(s) de verrouillage (26).
